(19) Europäisches Patentamt

European Patent Office

Office européen des brevets

(11) **EP 1 184 344 B1**

(12) **EUROPÄISCHE PATENTSCHRIFT**

(45) Veröffentlichungstag und Bekanntmachung des Hinweises auf die Patenterteilung:
**14.09.2005   Patentblatt 2005/37**

(51) Int Cl.$^7$: **C03B 5/225**

(21) Anmeldenummer: **01117281.4**

(22) Anmeldetag: **18.07.2001**

(54) **Verfahren zur Steuerung und Einstellung des Redoxzustandes von Redox-Läutermitteln in einer Glasschmelze sowie kontinuierliches Glasschmelzaggregat das mit Mittel zur Durchführung dieses Verfahrens versehen ist**

Method of regulating and adjusting the redox state from redox-refining means in a glass melt and continuous glass melting furnace provided with means for carrying out this method

Procédé pour le contrôle et l'ajustement de l' état rédox des moyens de raffinage rédox dans un bain de verre fondu et four continu à verre avec des moyens pour la mise en oeuvre de ce procédé

(84) Benannte Vertragsstaaten:
**AT BE CH CY DE DK ES FI FR GB GR IE IT LI LU MC NL PT SE TR**

(30) Priorität: **31.08.2000  DE 10042771**

(43) Veröffentlichungstag der Anmeldung:
**06.03.2002   Patentblatt 2002/10**

(73) Patentinhaber: **Schott AG**
**55122 Mainz (DE)**

(72) Erfinder:
• **Muschik, Wolfgang, Dr.**
  **55257 Budenheim (DE)**
• **Römer, Hildegard, Dr.**
  **61184 Karben (DE)**
• **Eichholz, Rainer**
  **55122 Mainz (DE)**
• **Kissl, Paul**
  **55124 Mainz (DE)**
• **Collignon, Johann**
  **95666 Mitterteich (DE)**
• **Zintl, Reinhard**
  **95615 Marktredwitz (DE)**

(56) Entgegenhaltungen:
**EP-A- 0 261 725**          **DE-C- 4 313 217**
**GB-A- 2 264 706**          **US-A- 5 006 144**

**Beschreibung**

Die Erfindung betrifft ein Verfahren zur Steuerung und Einstellung des Redoxzustandes von Redox-Läutermitteln in einer Glasschmelze und ein kontinuierliches glasschmelzaggregat das mit Mittel zur Durchführung dieses Verfahrens versehen ist.

Unter Läuterung versteht man in Bezug auf Glasschmelzen die Entfernung von Gasblasen aus der Schmelze. Um höchste Fremdgas- und Blasenfreiheit zu erzielen, bedarf es der gründlichen Durchmischung und Entgasung des geschmolzenen Gemenges.

Das Verhalten von Gasen bzw. von Blasen in einer Glasschmelze sowie deren Entfernung ist beispielsweise in "Glastechnische Fabrikationsfehler", herausgegeben von H. Jebsen-Marwedel und R. Brückner, 3. Auflage, 1980, Springer Verlag, auf den Seiten 195 ff. beschrieben.

Am häufigsten werden chemische Läuterverfahren angewendet. Ihr Prinzip besteht darin, daß der Schmelze Verbindungen zugesetzt werden, die sich zersetzen und Gase abspalten, oder Verbindungen, die bei höheren Temperaturen flüchtig sind, oder Verbindungen, die in einer Gleichgewichtsreaktion bei höheren Temperaturen Gase abgeben.

Die letzte Gruppe von Stoffen umfaßt die sogenannten Redox-Läutermittel wie beispielsweise Arsenoxid und Antimonoxid, aber auch $SnO_2$, $CeO_2$, $Fe_2O_3$, $ZnO$, $TiO_2$, $V_2O_5$, $MoO_3$, $WO_3$, $Bi_2O_5$, $Cr_2O_3$ und MnO. Dabei werden als Redox-Läutermittel polyvalente Ionen eingesetzt, die in mindestens zwei Oxidationsstufen auftreten können, welche in einem temperaturabhängigen Gleichgewicht untereinander stehen, wobei bei hohen Temperaturen ein Gas, meist Sauerstoff, freigesetzt wird.
Das Redox-Gleichgewicht der in der Schmelze gelösten Substanz läßt sich am Beispiel des Arsenoxids durch die Gleichung (I)

$$As_2O_5 \leftrightarrows As_2O_3 + O_2 \uparrow \qquad (I)$$

Darstellen.
Die Gleichgewichtskonstante K zu (I) kann wie in Gleichung (II) formuliert werden:

$$K(T) = \frac{a_{As_2O_3} \cdot p_{O_3}}{a_{As_2O_3}} \qquad (II)$$

In dieser Gleichung bedeuten $aAs_2O_3$ und $aAs_2O_5$ die Aktivitäten des Arsentri- bzw. Arsenpentoxids und $Po_2$ die Fugazität des Sauerstoffs.
Die Gleichgewichtskonstante K ist stark temperaturabhängig, und über die Temperatur und die Aktivität der oxidischen Arsenverbindungen läßt sich eine definierte Sauerstoffugazität $pO_2$ einstellen.

Bei der chemischen Läuterung kann man im wesentlichen drei Läutereffekte unterscheiden:

1) einen primären Läutereffekt, bei dem in die Blasen , die bei der Zersetzung des Gemenges entstehen, beispielsweise $CO_2$-, N2-, $H_2O$-, NO-, $NO_2$-Blasen, die Gase eindiffundieren, die bei Zersetzung der zugegebenen Läutermittel entstehen, z. B. Sauerstoffgas aus Redox-Läutermitteln;
2) einen sekundären Läutereffekt, bei dem eine Entgasung der Glasschmelze erfolgt, in dem es zur spontanen Bildung von Gasblasen durch die zugegebenen Läutermittel kommt, z. b. $O_2$-Blasen aus Redox-Läutermittel. In diese Läuterblasen könne Fremdgase wie $CO_2$, $H_2O$, $N_2$, NO, $NO_2$ eindiffundieren, selbst wenn ihr Partialdruck unter $10^5$ Pa liegt und
3) einen sog. Resorptionseffekt, bei dem sich nach 1) oder 2) entstandene, bei einer Temperaturerniedrigung noch in der Schmelze befindliche aufgeblähte Blasen von zum Beispiel Sauerstoff auflösen, beispielsweise beim Redox-Gleichgewicht (I) durch Verschiebung des Gleichgewichts auf die Seite des Edukts.

Die Freisetzung der Läutergase erfolgt oftmals bereits beim Einschmelzen, die Läutergase stehen für den sekundären Läutereffekt nicht mehr zur Verfügung. Es findet nur der primäre Läutereffekt statt. Übliche Redox-Läutermittel wie $As_2O_5$ oder $Sb_2O_5$ zeigen eine effektive Läutersauerstoffabgabe zwischen 1150 °C und 1500 °C mit einem Maximum bei 1220 °C bis 1250 °C, wobei die jeweilige Sauerstoffabgabe außer von der Temperatur im wesentlichen von der Glaszusammensetzung und von der Läutermittelzusammensetzung (ein oder mehrere Läutermittel) abhängt. Es müssen, besonders für hochschmelzende Gläser, größere Mengen an Läutermittel als eigentlich notwendig eingesetzt werden, um überhaupt einen Läutereffekt zu erzielen. Die hohen Mengen an Läutermittel sind besonders bei Arsen- und Antimonoxid nachteilig, da sie stark toxisch und teuer sind. Zudem kann eine Zugabe von Läutermitteln die Eigenschaften des Glases unvorteilhaft beeinflussen sowie die Herstellungskosten - da es sich um in der Regel teure Verbindungen handelt - erhöhen.

Für eine optimale Läuterung mittels Redox-Läutermitteln wird daher versucht einen möglichst hohen Anteil des Läutermittels über den Einschmelzvorgang hinaus in der höheren Oxidationsstufe zu halten. Bei einigen Läutermitteln ist die höhere Oxidationsstufe kommerziell nicht attraktiv einsetzbar, bei anderen Läutermitteln wird die höhere Oxidationsstufe im hohen Maße schon im Gemenge reduziert. Zur Aufoxidation der einen Läutermittel bzw. zur Verhinderung der Reduktion der anderen Läutermittel, werden dem Gemenge Nitratverbindungen zugesetzt, die sich unter Sauerstofffreigabe zersetzen.

Nachteilig ist dabei, daß Nitrate relativ teuere Gemengekomponenten sind die darüberhinaus bei ihrer Zersetzung umweltschädliche NO$_x$-Verbindungen freigeben. Nitrate sind bei einer Reduktion bis zum reinen Stickstoff eine Quelle von nur schwer läuterbaren Stickstoffblasen. Bei einer reinen Oxyfluelbeheizung sind sie sogar die einzige Quelle für Stickstoffblasen aus dem Einschmelzvorgang. Die Schwierigkeit der Beseitigung gerade von Stickstoffblasen, liegt in ihrer sehr geringen Löslichkeit und Diffusionskonstante in gängigen technischen Glasschmelzen begründet.

Ein Verfahren zur Steuerung des Redox-Zustands polyvalenter Bestandteile einer Glasschmelze ist aus der Schrift US-A-5 006 144 bekannt. Hierzu werden unter anderem in einer kontinuierlich betriebenen Glasschmelzwanne reduzierende Gase, z.B. Kohlenwasserstoffe (Methan, Propan) oder Kohlenmonoxid, mittels Blasdüsen durch die Glasschmelze geleitet.

Es ist daher Aufgabe der Erfindung, ein Verfahren zur Steuerung und Einstellung des Redoxzustandes von Redox-Läutermitteln in einer Glasschmelze zu finden, wobei die Redox-Läutermittel den Einschmelzvorgang in einer möglichst hohen Oxidationsstufe überstehen sollen und wobei möglichst auf den Zusatz von Nitraten zur Glasschmelze verzichtet werden kann.

Weiterhin ist es Aufgabe der Erfindung eine entsprechende Vorrichtung zur Durchführung eines solchen Verfahrens zu finden.

Gelöst wird diese Aufgabe dadurch, daß ein Verfahren zur Steuerung und Einstellung des Redox-Zustandes von Redox-Läutermitteln in einer Glasschmelze bereitgestellt wird, bei dem während des Einschmelzvorgangs im wesentlichen Sauerstoffgas durch die Glasschmelze geblasen wird.

Bei kontinuierlich betriebenen Schmelzaggregaten, z. B. Schmelzwannen, wird bei einem erfindungsgemäßen Verfahren Sauerstoff im Einschmelzbereich des Schmelzaggregats durch die Glasschmelze geleitet.

Erfindungsgemäß kann das Verfahren in einem kontinuierlichen Schmelzaggregat durchgeführt werden, wobei im Einschmelzbereich Blasdüsen zum Einblasen von Sauerstoffgas durch die Glasschmelze angeordnet sind, um den Redoxzustandes von Redox-Läutermitteln in der Glasschmelze zu steuern und einzustellen.

Durch die erfindungsgemäßen Maßnahmen lassen sich die geschilderten Nachteile des Nitrateinsatzes vollständig vermieden. Dadurch, daß im wesentlichen Sauerstoffgas während des Einschmelzvorgangs durch die Glasschmelze geblasen wird, überstehen die Redox-Läutermittel den Einschmelzvorgang in einer möglichst hohe Oxidationsstufe und stehen somit für die eigentliche Läuterung zur Verfügung.

Zur effektiven Steuerung und Einstellung des Redoxzustands der Redox-Läutermittel wird das Sauerstoffgas mittels Blasdüsen, insbesondere von unten nach oben durch die Glasschmelze, geblasen.

Dieses Einblasen von Sauerstoffgas kann durch konventionelle Blasdüsen geschehen, wie sie in der Glasindustrie zur Verbesserung des Wärmetransportes vom Oberofen zum Glasbad schon im Einsatz sind.

Die Zahl, geometrische Verteilung und die Gasbeaufschlagung der Blasdüsen sind stark abhängig von der Glasart und anderen Erfordernissen der jeweiligen Produktionseinheit. Sie können dabei aber auch sehr gut an vorhandene Gegebenheiten und Schmelzaggregate angepaßt werden.

Bei Wannen mit Einlegevorbauten z. B. können die Verteilung und Gasbeaufschlagung der Düsen vorzugsweise so gewählt werden, daß vor und am Ende des Gemengeteppichs, jeweils zwei oder mehrere zueinander versetzt angeordnete Blasdüsenreihen quer zum Materialfluß mit einer höheren Gasbeaufschlagung betrieben werden. Die Gasmenge kann dabei beispielsweise zwischen 15 und 200 l/h liegen. Im Bereich von der Einlegewand bis zu den eben beschriebenen Blasdüsenreihen kann eine von der Ausdehnung des Gemengeteppichs abhängige Zahl von weiteren Blasdüsen verteilt werden. Die Gasbeaufschlagung dieser Düsen ist vorzugsweise geringer als bei den zuerst erwähnten Reihen. Die untere Grenze kann dabei sehr klein gewählt werden, (<1 l/h) und hängt von der Dosierungsmöglichkeit der Blasdüsenkonstruktion ab. Der Abstand der einzelnen Blasdüsen untereinander und damit auch ihre Anzahl ist neben der schon erwähnten Ausdehnung des Gemengeteppichs und der Breite des Schmelzaggregates eine Funktion der Glasbadhöhe, der Gasbeaufschlagung und der Viskosität des Glases.

Typische Abstandwerte für konventionelle Blasdüsen mit Gasdurchsätzen zwischen 10 - 150 l/h und Glasständen von ca. 1m liegen im Bereich von 0,3 -1,5 m.

Das durch die Glasschmelze geleitete Sauerstoffgas kann dabei in marktüblichen Reinheitsgeraden eingesetzt werden.

Die Blasdüsen werden vorzugsweise in den Boden unterhalb des Gemengeteppichs eines kontinuierlich betriebenen Schmelzaggregats, beispielsweise einer Schmelzwanne, eingebaut. Die Verteilung der Blasdüsen richtet sich nach der Form des jeweiligen Gemengeteppichs. Es muß nur durch eine entsprechende Anordnung dafür gesorgt werden, daß durch das Einblasen von Sauerstoffgas und die dadurch erzeugten Strömungen innerhalb der Glasschmelze keine unaufgeschmolzenen Gemengereste in den Läuterbereich der Wanne transportiert werden.

Diese Blasdüsen werden mit Sauerstoffgas beaufschlagt, so daß der Sauerstoff aus der Nitratzersetzung durch das Sauerstoffgas aus den Blasdüsen ersetzt wird.

Zusätzlich hat das Einblasen von Sauerstoffgas während des Einschmelzvorgangs den Vorteil, daß das Gemenge durch die größeren Geschwindigkeitsgradienten mit gleicher Intensität bei tieferen Temperaturen einschmilzt. Hierdurch ist es zusätzlich möglich einen größeren Anteil des Redox-Läutermittels in der höheren Oxidationsstufe über den Einschmelzvorgang hinweg für die Läuterung zu erhalten.

Ausführungsbeispiel:

In einer kontinuierlichen Schmelzwanne mit 900 l Einschmelzbecken wurde ein Alumosilicatglas (z. B. Schott Robax® der Firma Schott Glas) mit einem Durchsatz von 1 t/Tag erschmolzen. Über zwei Bubblingdüsen wurden insgesamt 800 l/h Sauerstoffgas zugeführt. Das Gemenge war nitratfrei. Das Glas, daß der Wanne entnommen wurde, hatte eine vergleichbare Qualität wie Glas aus Phasen mit nitrathaltigem Gemenge, ohne daß Sauerstoffgas durch die Glasschmelze geblasen wurde und war deutlich besser bezüglich der Blasenqualität als Glas aus der Referenzphasen ohne Nitrat und ohne daß Sauerstoffgas durch die Glasschmelze geblasen wurde. Während die Blasenzahlen in der Referenzphase im Mittel bei ca. 10 Blasen pro kg Glas lagen, wurden in der Phase bei dem Sauerstoffgas während des Einschmelzvorgangs durch die Glasschmelze geblasen wird, nur ca. 3 - 5 Blasen pro kg Glas beobachtet.

## Patentansprüche

1.  Verfahren zur Steuerung und Einstellung des Redoxzustandes von Redox-Läutermitteln in einer Glasschmelze,
    **dadurch gekennzeichnet,**
    **dass** während des Einschmelzvorgangs im wesentlichen Sauerstoffgas durch die Glasschmelze geblasen wird.

2.  Verfahren nach Anspruch 1,
    **dadurch gekennzeichnet,**
    **dass** der Einschmelzvorgang im Einschmelzbereich eines kontinuierlich betriebenen Schmelzaggregats stattfindet.

3.  Verfahren nach Anspruch 1 oder 2,
    **dadurch gekennzeichnet,**
    **dass** das Sauerstoffgas mittels Blasdüsen, insbesondere von unten nach oben, durch die Glasschmelze geblasen wird.

4.  Verfahren nach wenigstens einem der Ansprüche 1 bis 3,
    **dadurch gekennzeichnet,**
    **dass** das Sauerstoffgas im Bereich unterhalb des auf der Glasschmelze aufschwimmenden Gemengeteppichs durch die Glasschmelze geblasen wird.

5.  Verfahren nach wenigstens einem der Ansprüche 1 bis 4,

**dadurch gekennzeichnet,**
**dass** auf den Zusatz von Nitrat-Verbindungen zur Glasschmelze im wesentlichen verzichtet wird.

6.  Kontinuierliches Glasschmelzaggregat,
    **dadurch gekennzeichnet,**
    **dass** im Einschmelzbereich Blasdüsen zum Einblasen von Sauerstoffgas durch die Glasschmelze angeordnet sind, um den Redoxzustandes von Redox-Läutermitteln in der Glasschmelze zu steuern und einzustellen.

## Claims

1.  Method for controlling and setting the redox state of redox-refining agents in a glass melt, **characterized in that** substantially oxygen gas is blown through the glass melt during the melting-down operation.

2.  Method according to Claim 1, **characterized in that** the melting-down operation takes place in the meltdown region of a continuously operated melting unit.

3.  Method according to Claim 1 or 2, **characterized in that** the oxygen gas is blown through the glass melt by means of blowing nozzles, in particular from the bottom to the top.

4.  Method according to at least one of Claims 1 to 3, **characterized in that** the oxygen gas is blown through the glass melt in the region below the batch carpet floating on the glass melt.

5.  Method according to at least one of Claims 1 to 4, **characterized in that** substantially no nitrate compounds are added to the glass melt.

6.  Continuous glass-melting unit, **characterized in that** blowing nozzles for blowing oxygen gas through the glass melt are arranged in the meltdown region, in order to control and set the redox state of redox-refining agents in the glass melt.

## Revendications

1.  Procédé de contrôle et de réglage de l'état redox d'agents d'affinage redox dans un bain de verre en fusion, **caractérisé en ce que** pendant l'opération de mise en fusion, on fait barboter essentiellement de l'oxygène gazeux dans le bain de verre en fusion.

2.  Procédé selon la revendication 1, **caractérisé en ce que** l'opération de mise en fusion a lieu dans la zone de mise en fusion d'un ensemble de mise en fusion qui fonctionne en continu.

3.  Procédé selon les revendications 1 ou 2, **caractérisé en ce que** l'on fait barboter l'oxygène gazeux dans le bain de verre en fusion au moyen d'ajutages de barbotage, et en particulier du bas vers le haut.

4.  Procédé selon au moins l'un des revendications 1 à 3, **caractérisé en ce que** l'on fait barboter l'oxygène gazeux dans le bain de verre en fusion dans la zone située en dessous du tapis de mélange qui flotte sur le bain de verre en fusion.

5.  Procédé selon au moins l'un des revendications 1 à 4, **caractérisé en ce que** l'on omet essentiellement l'addition de composés nitratés dans le bain de verre en fusion.

6.  Ensemble de mise en fusion de verre en continu, **caractérisé en ce que** des ajutages de barbotage destinés à faire barboter de l'oxygène gazeux dans le bain de verre en fusion sont disposés dans la zone de mise en fusion pour contrôler et régler l'état redox des agents d'affinage redox dans le bain de verre en fusion.